# EUROPÄISCHE PATENTSCHRIFT

(11) **EP 1 268 248 B1**
(45) Veröffentlichungstag und Bekanntmachung des Hinweises auf die Patenterteilung: **02.06.2004**
(21) Anmeldenummer: 01936090.8
(22) Anmeldetag: 16.03.2001
(51) Int. Cl.: B60T 8/40

(54) **KOLBENPUMPE**
PISTON PUMP
POMPE A PISTON

(30) Priorität: 21.03.2000 DE 10013858
(43) Veröffentlichungstag der Anmeldung: 02.01.2003
(73) Patentinhaber: Continental Teves AG & Co. OHG, 60488 Frankfurt am Main (DE)
(72) Erfinder: HINZ, Axel, 61267 Neu-Anspach (DE); REINARTZ, Hans-Dieter, 60439 Frankfurt/M (DE); VOLZ, Peter, 64291 Darmstadt (DE); VOGEL, Günther, 63303 Dreieich (DE); VIERING, Matthias, 64289 Darmstadt (DE); GREIFF, Uwe, 61352 Bad Homburg (DE)
(86) Internationale Anmeldenummer: PCT/EP2001/003049
(87) Internationale Veröffentlichungsnummer: WO 2001/070550

(56) Entgegenhaltungen:
- DE-A- 19 527 401
- DE-A- 19 743 186
- DE-A- 19 816 289
- US-A- 5 538 335

## Beschreibung

Die Erfindung betrifft eine Kolbenpumpe gemäß dem Oberbegriff von Patentanspruch 1.

Derartige Pumpen sind insbesondere in regelbaren Bremssystemen wie ABS oder ESP weit verbreitet. Aufgrund der Massenfertigung werden an ihre kostengünstige Herstellung und Montage daher wachsende Anforderungen gestellt.

Aus der DE 198 16 289 A1 ist ein als Baueineinheit getrennt handhabbares und prüfbares Druckventil für Kolbenpumpen bekannt geworden, welches insbesondere durch Verstemmen oder Verclinchen in ein Pumpengehäuse einbringbar ist. Es ist weiterhin bekannt geworden, dass sich eine Rückstellfeder zum Rückstellen eines Kolbens der Pumpe mit ihrem dem Kolben abgewandten Ende an einem Ventilsitzträger des Ventils abstützt. Die Erfindung geht von einer solchen Kolbenpumpe aus, die in der Montage und Herstellung relativ kompliziert und teuer ist.

Eine Kolbenpumpe mit allen Merkmalen des Oberbegriffs des Patentanspruchs 1 ist aus der DE 197 43 186 A1 bekannt. Dabei ist die Rückstellfeder direkt an dem Ventilsitzträger angeordnet. Zu diesem Zweck verfügt der Ventilsitzträger über einen ringförmigen Vorsprung , der zur Verbindung der Rückstellfeder mit einer zweiten Baugruppe - umfassend den Ventilsitzträger - dient.

Die Aufgabe der Erfindung ist es daher, eine derartige bekannte Kolbenpumpe in ihrer Herstellung und Montage zu verbilligen bzw. zu vereinfachen.

Diese Aufgabe wird bei einer gattungsgemäßen Pumpe durch die sich aus dem kennzeichnenden Teil des Anspruchs 1 zusätzlich ergebenden Merkmale gelöst. Die Erfindung besteht im Prinzip also darin, über das getrennt handhabbare Druckventil hinaus auch noch zumindest die Rückstellfeder über den Ventilsitzträger mittels einem Federtopf an das Ventil der Kolbenpumpe zu fesseln, so dass sie gleichzeitig mit dem Druckventil zu einer kompletten Baugruppe verbaut werden kann. Dabei kann der Federtopf in geeigneter Weise beispielsweise durch Reibschluss, Formschluss oder lösbares Verrasten mit dem Ventilsitzträger verbunden sein, so dass damit auch die Rückstellfeder am Ventilsitzträger befestigt ist.

Gemäß einer Weiterbildung der Erfindung ist der Federtopf im wesentlichen zylinderförmig ausgestaltet, wobei das dem Ventilsitzträger zugewandte Ende des Federtopfes in einer Ausnehmung des Ventilsitzträgers eingefügt ist, so dass die aneinander grenzenden Flächen etwa durch Reib- oder Formschluss gehalten werden. Hierdurch ergibt sich eine einfache Konstruktion, da der Federtopf steif in dem Ventilsitzträger sitzt.

Vorzugsweise sind dabei zwei Ausführungsformen möglich. Bei der einen wird die Rückstellfeder mit ihrem dem Kolben zugewandten Ende durch entsprechende radiale Vorsprünge eines Kolbendeckels gesichert, der mittels am Federtopf vorzugsweise vorgesehenen Konsolen eine Art Käfig bildet, so dass die Feder aus dem Käfig nicht herausfallen kann. Die Konsolen bilden dabei insbesondere auch einen Anschlag für eine im Pumpengehäuse vorgesehene Kolbendichtung.

Die andere Möglichkeit besteht darin, das dem Kolben abgewandte Federende durch Form- oder Reibschluss an dem entsprechenden Ende des Federtopfes zu sichern, so dass die Feder auf diese Weise aus dem hier offenen Topf nicht herausfallen kann. Für beide Arretierungsmaßnahmen ist wichtig, dass die Feder auch dann im Topf bleibt bzw. von diesem geführt wird, wenn die Ventileinheit mit dem Federtopf waagrecht angeordnet und montiert wird. Das bedeutet, dass das Druckventil mit der Rückstellfeder und möglicherweise gleichzeitig zusätzlich mit dem Kolben nicht nur in vertikaler Richtung montiert werden kann, sondern auch waagerecht. Daraus ergibt sich wiederum der Vorteil, dass zwei einander gegenüberliegende Kolben gleichzeitig montiert werden können, während bei der ersten Montageart das Pumpengehäuse um 180 Grad geschwenkt werden muss, um ein Ventil mit Feder nach dem anderen von oben her kommend in die entsprechende Bohrung des Pumpengehäuses einfädeln zu können.

Der Federtopf kann aber nicht nur zur Halterung und Ausrichtung der Feder angewandt werden, sondern auch an geeigneter Stelle mit kleinen siebartig wirkenden Durchbrechungen versehen sein, so dass der Federtopf gleichzeitig auch noch als Filter wirkt, um in dem Druckmittel schwimmende Schmutzteile oder Abrieb von sich zueinander bewegenden Dichtungs- und Ventilteilen fernzuhalten, die die Pumpe oder andere Teile stören oder beschädigen könnten. Der Filter kann beispielsweise vor der Öffnung des sich an die Arbeitskammer der Pumpe anschließenden Druckventils auf dem Ventilsitzträger angeordnet werden. Da man den Topfboden vor der dem Ventilsitz abgewandten Seite des Ventilsitzträgers anbringen wird, wird man zweckmäßigerweise den Filter im Zentrum dieser Seite des Federtopfs anordnen. Eine andere Möglichkeit besteht darin, den oder die die Filter in den Mantelflächen des zylinderförmigen Federtopfs direkt vor dem Zugang aus dem Pumpengehäuse kommender Kanäle anzuordnen. Der Filter kann einstückig mit dem Federtopf ausgebildet sein, aber auch als separates Bauteil am Fedetropf vorgesehen sein.

Mit besonderem Vorteil ist als Kolben die Nadel eines handelsüblichen Nadellagers vorgesehen. Derartige Nadeln werden bereits heute in Massenfertigung hergestellt und sind deshalb kostengünstig zu beschaffen.

Gemäß einer bevorzugte Variante der vorliegenden Erfindung ist im Pumpengehäuse ein Saugventil vorgesehen, das vom Druckventil, der Rückstellfeder, dem Federtopf und dem Kolben unabhängig montier- und prüfbar ist. Dadurch wird erneut die Montage der erfindungsgemäßen Kolbenpumpe vereinfacht.

Wie oben bereits erwähnt, erhält man besonders große Montagebaugruppen, wenn die Rückstellfeder zusätzlich auch noch mit dem Pumpenkolben verbunden ist. Die Baugruppe besteht dann aus Druckventil, Rückstellfeder, Federtopf und Kolben.

Gemäß einer Weiterbildung der Erfindung kann das Druckventil einen Ventildeckel aufweisen, in dem eine Dämpfungskammer vorgesehen ist, so dass in vorteilhafter Weise auf eine separate Dämpfung verzichtet werden kann.

In der nachfolgenden Beschreibung werden weitere Merkmale und Einzelheiten der vorliegenden Erfindung in Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar. In den Zeichnungen zeigen:
- Fig. 1 - 2: im Längsschnitt erste Ausführungsbeispiele der vorliegenden Erfindung mit einem Druckventil, in dem ein Federkäfig angeordnet ist,
- Fig. 3 - 4: ebenfalls in einer geschnittenen Ansicht weitere mögliche Ausgestaltungen des Druckventils,
- Fig. 5 - 6: ein weiteres Ausführungsbeispiel im Schnitt, wobei erfindungsgemäß eine Rückstellfeder für einen Kolben am Druckventil befestigt ist,
- Fig. 7 - 10: im Längsschnitt eine Variante, bei der im Druckventil eine Dämpfungskammer vorgesehen ist,
- Fig. 11: in geschnittener Ansicht eine Weiterbildung der vorliegenden Erfindung, bei der die Rückstellfeder zusätzlich mit dem Kolben verbunden ist, und
- Fig. 12: ein bevorzugtes Ausführungsbeispiel der Erfindung mit einem vom Federtopf separat ausgebildeten Filter, ebenfalls im Schnitt.

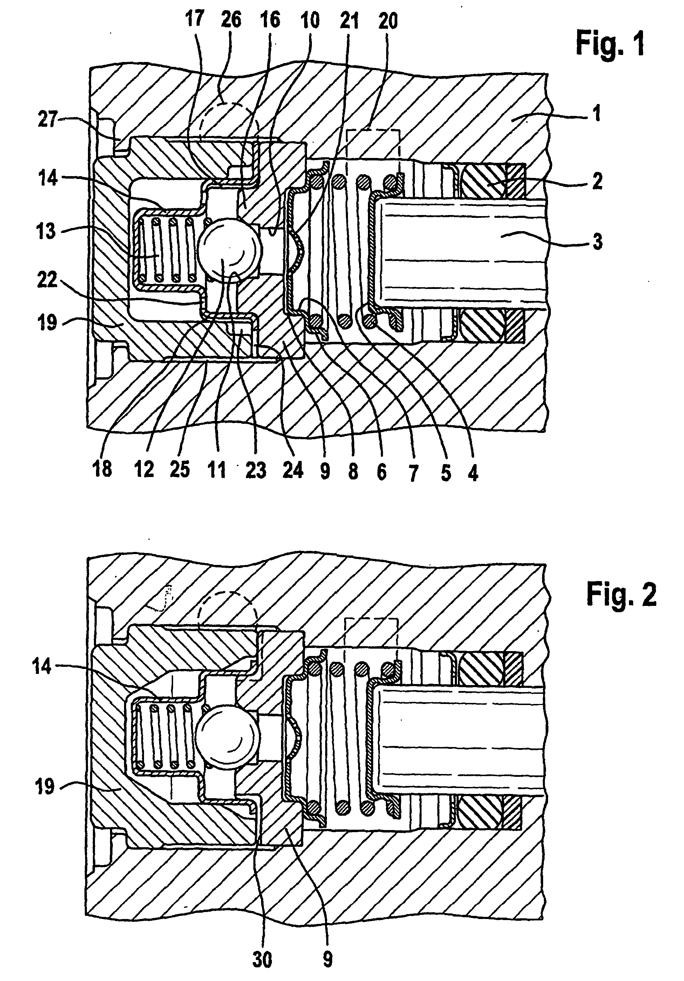

In Fig. 1 ist ein Pumpengehäuse 1 gezeigt, in dem über eine Kolbendichtung 2 abgedichtet ein Pumpenkolben 3 geführt ist. Der Kolben 3 wird von einem nicht dargestellten Exzenter in der Zeichnungsebene nach links bewegt und dann von einer Rückstellfeder 4 in seine untere Totpunktlage, d.h. in der Zeichnungsebene nach rechts, zurückgeschoben. Dabei folgt ein Fuß des Kolbens 3 der nicht dargestellten Außenfläche des Exzenters. Auf dem Kolben 3 sitzt vorzugsweise ein Kolbendeckel 5, der auf das in der Zeichnung linke Kolbenende aufgeklemmt sein kann, so dass dieser Deckel 5 auch in waagrechter Kolbenlage am Kolben 3 haften kann. Das in der Zeichnung linke Ende der Rückstellfeder 4 ist in einem Federtopf 6 eingerastet oder eingeklemmt, so dass die Feder 4 ebenfalls in waagrechter Lage an dem Federtopf 6 haften bleibt. Das in der Zeichnung rechte Ende der Rückstellfeder 4 kann ebenfalls mit dem Kolbendeckel 5 verrastet oder verklemmt sein. Der Federtopf 6 selbst ist insbesondere mit einem, zylinderförmigen Vorsprung 7 in eine entsprechende Ausnehmung 8 in einem Ventilsitzträger 9 eingeklemmt bzw. auf andere Art und Weise daran befestigt, so dass er lageunabhängig von dem Ventilsitzträger 9 gehalten wird. Dadurch ist erfindungsgemäß auch die Rückstellfeder 4 an den Ventilsitzträger 9 in Form einer eigenständig handhabbaren Baueinheit gefesselt, so daß diese Bauteile beim Zusammenbau der Kolbenpumpe gemeinsam montiert werden können.

Der Ventilsitzträger 9 besitzt eine stufenförmige Durchgangsbohrung 10, deren umlaufende gerundete Stirnkante den Sitz 11 für einen bevorzugt kugelförmigen Ventilkörper 12 bildet. Der Ventilkörper 12 wird durch eine Vorspannfeder 13 gegen den Sitz 11 gedrückt, wobei sich die Vorspannfeder mit ihrem anderen Ende an einem Federkäfig 14 abstützt. Der Federkäfig 14 selbst ist mit einer umlaufenden Mantelfläche an einem Zylindervorsprung 16 des Ventilsitzträgers 9 ggf. über Sicken, Ausbauchungen bzw. Vorsprünge 17 verklemmt. Dementsprechend kann die Außenfläche des Federkäfigs 14 ggf. über weitere Sicken oder Vorsprünge 18 an der Innenfläche eines Ventildeckels 19 verklemmt bzw. eingepresst sein. Somit bildet das Ventil einschließlich des Federtopfes 6 und der Rückstellfeder 4 eine Baueinheit. An diese Einheit kann sich ggf. noch der damit verbunde Kolben 3 und der Kolbendeckel 5 anschließen.

Das in Fig. 1 dargestellte Ventil arbeitet als Druckventil, wobei das Druckmittel über einen in Fig. 1 gestrichelt angedeuteten Saugkanal 20 und einen im Federtopf 6 vorzugsweise eingearbeiteten Filter 21 in den Innenraum des Federkäfigs 14 gelangen kann. Von dort kann das Druckmittel, bei dem es sich insbesondere um Bremsflüssigkeit handelt, über Öffnungen 22 in den Innenraum des Ventildeckels 19 und von dort zwischen den weiteren Sicken 18 in einen Ringkanal 23 gelangen. Der Federkäfig 14 ist des weiteren mit radialen Einschnitten 24 versehen, die ein Abfließen des Druckmittels aus dem Ringkanal 23 in einen Ringraum 25 gestatten, an den sich ein gestrichelt dargestellter Druckkanal 26 anschließt, der insbesondere zu nicht dargestellten Radbremsen eines regelbaren Bremssystems führen kann. Der vorzugsweise aus Aluminium hergestellte Ventildeckel 19 kann mit dem Pumpengehäuse 1 verstemmt sein, wie die Prägungen 27 zeigen. Die Verstemmung ist vorzugsweise umlaufend und kann somit den Ringraum 25 druckdicht abdichten.

Die Konstruktion nach Fig. 2 ist im Vergleich zu Fig. 1 hinsichtlich der Befestigung des Federkäfigs 14 und der Druckmittelführung etwas abgeändert. Das Herausleiten des Druckmittels aus dem Innenraum des Federkäfigs 14 erfolgt hier über Kanäle, die durch in den Ventilsitzträger 9 oder den Ventildeckel 19 eingeprägte Nuten 30 gebildet sind. Damit wird der Strömungsweg für das Druckmittel kürzer, da dieses nicht mehr in den außerhalb des Federkäfigs 14 liegenden Innenraum des Ventildeckels 19 gelangen kann. Die Befestigung von Ventilsitzträger 9 und Ventildeckel 19 erfolgt wieder durch jeweiliges Verklemmen mit dem Pumpengehäuse, wobei der Deckel 19 auf die Außenfläche und der Ventilsitzträger 9 auf die innere Mantelfläche des Federkäfigs 14 aufgepresst sein kann. Die Nuten 30 können wiederum als Blenden zur Druckdämpfung wirken, so dass der Innenraum des Deckels 19 bzw. der Innenraum des Federkäfigs 14 (entsprechend Fig. 1 und Fig. 2) zu Dämpfungskammern werden können.

Im übrigen kann in Fig. 2 ebenso wie in Fig. 1 der in Fig. 2 nicht bezeichnete Federtopf aus Stahl gezogen, während der Ventildeckel 19 aus Aluminium und fließgepresst sein kann. Auch der Federkäfig 14 kann aus einem Stahlblech gezogen sein. Die beschriebenen Konstruktionen haben den Vorteil, dass beim Verbinden von Deckel 19 und Ventilsitzträger 9 zu einer Einheit nur geringe Verformungskräfte zwischen den genannten Teilen ausgeübt werden, so dass kaum die Gefahr besteht, dass durch das Zusammenfügen sich die Abmessungen des Ventilsitzes ändern. Die entstehende Verformung wird überwiegend durch die Wand des Federkäfigs 14 aufgenommen.

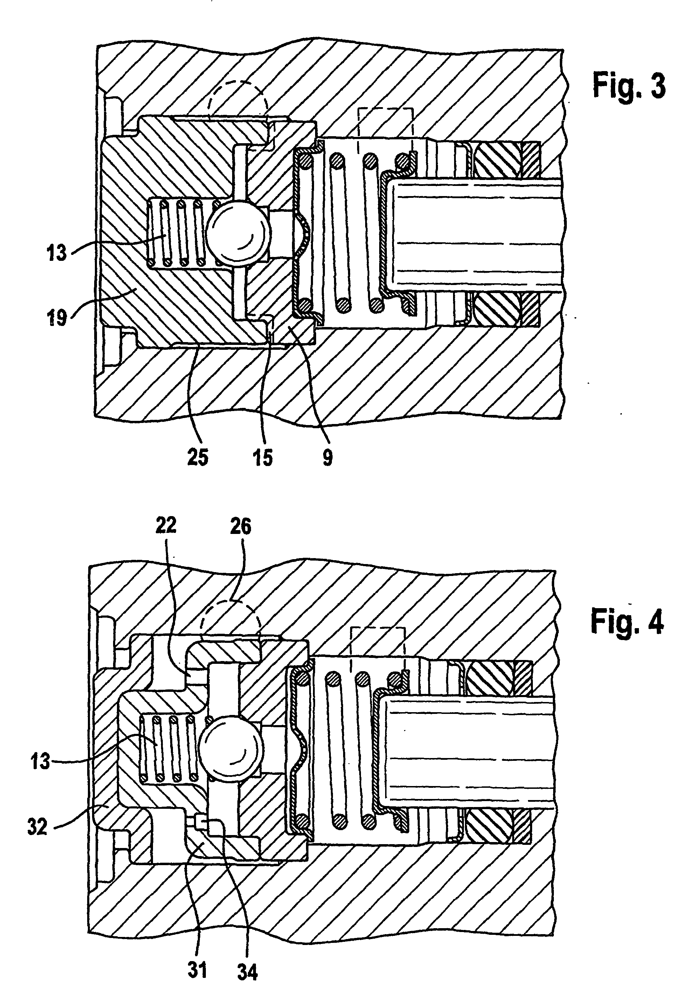

Im in Fig. 3 gezeigten Ausführungsbeispiel der vorliegenden Erfindung wurde auf einen besonderen Federkäfig 14 verzichtet, so daß sich die Vorspannfeder 13 unmittelbar am Boden des Ventildeckels 19 abstützt. Der Deckel 19 und der Ventilsitzträger 9 sind hier unmittelbar miteinander verpresst. In den Ventilsitzträger 9 sind insbesondere strahlenförmig Nuten eingeprägt, die einen Austritt des Druckmittels aus dem Innenraum des Ventildeckels 19 in den Ringraum 25 gestatten. Hierdurch ergibt sich in vorteilhafter Weise eine Vereinfachung der Konstruktion und eine stabilere Verbindung der beiden Teile 9, 10 des Ventils.

Im Ausführungsbeispiel nach Fig. 4 wurde der oben aus Stahl gezogene Federkäfig 14 durch einen massiv gezogenen Federkäfig 31 aus Aluminium ersetzt, der die Dichtkraft des Ventils sicherstellt, und gleichzeitig eine Abstützung für die Vorspannfeder 13 zur Verfügung stellt. Der Deckel 32 ist vorzugsweise ebenfalls aus Aluminium, fließgepresst oder gezogen, und auf den Federkäfig 31 äufgepresst, so dass sich eine sehr stabile und materialsparende Konstruktion ergibt. Über eine Öffnung 22, die alternativ auch als gestufte Düse 34 ausgestaltet sein kann, kann das Druckmittel in den Druckkanal 26 abfließen, wobei sich gleichzeitig auch noch eine Dämpfungswirkung erreichen lässt.

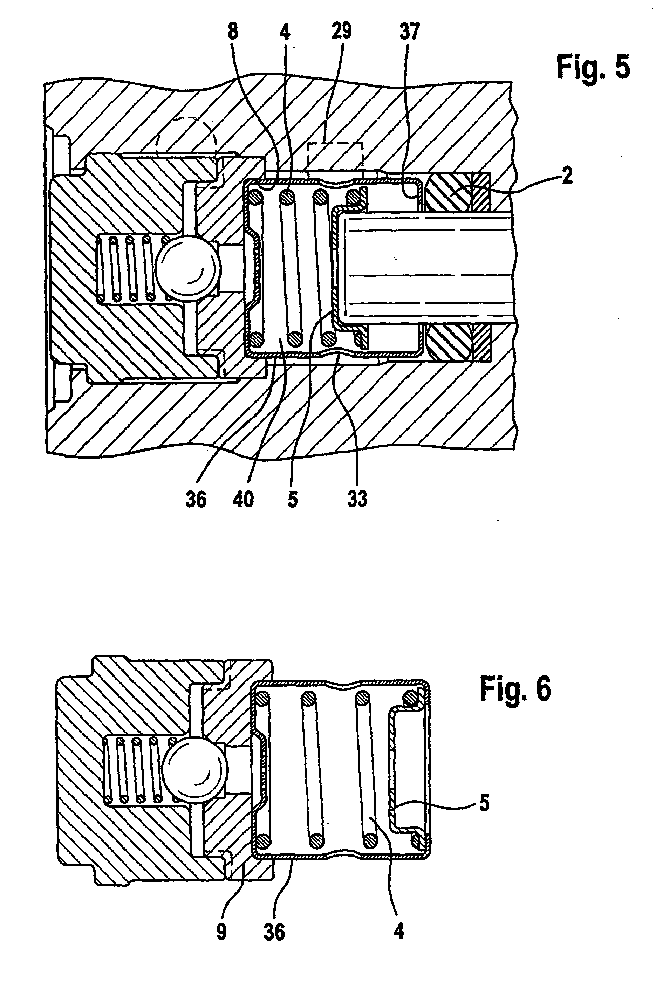

Das Ausführungsbeispiel gemäß Fig. 5 und 6 weist gegenüber den aus Fig. 1 bis 4 bekannten Ausführungen Veränderungen hinsichtlich des Federtopfes 36 auf. Während nämlich in den vorangegangenen Ausführungsbeispielen das dem Ventil zugewandte Ende der Rückstellfeder 4 durch Einklemmen oder ähnliche Befestigungsarten zumindest mit der obersten Windung in dem dortigen Topf 6 gehalten wurde, erstreckt sich bei den Fig. 5 und 6 der Topf 36 bis zu dem Dichtungspaket 2, wobei das Dichtungspaket 2 gleichzeitig noch durch eine radial nach innen weisende Konsole 37 in ihrer Lage gehalten wird. Diese Konsole 37 ist außerdem so weit radial nach innen gezogen, dass der Kolbendeckel 5 den Innenraum des Federtopfes 36 nicht verlassen kann, sondern bei nicht vorhandenem Kolben an der Konsole 37 anschlägt (siehe Fig. 6). Auf diese Art und Weise kann eine vorgespannte, paketartig vormontierte Einheit aus Feder 4, Federtopf 36 und Kolbendeckel 5 geschaffen werden. Das in der Zeichnung linke Ende des Federtopfes 36 ist wieder, wie schon im Zusammenhang mit den Fig. 1 bis 4 beschrieben, an der umlaufenden Seitenwand der zylinderförmigen Ausnehmung 8 des Ventilsitzträgers 9 eingeklemmt, so dass hier eine sichere Halterung für die Rückstellfeder 4 auch bei einer horizontalen Montage, bei der auch der Kolben gleichzeitig montiert werden kann, möglich ist. Eine dem Saugkanal 29 zugeordnete radial verlaufende Durchtrittsöffnung 33 im Federtopf 36 ermöglicht den Eintritt des Druckmittels in den Arbeitsraum 40 der Pumpe. Man erhält somit erfindungsgemäß wieder eine leicht zu montierende Einheit aus Druckventil und Rückstellfeder 4.

Durch die Verwendung des gestuften Ventilsitzträgers 9 steht auf der dem Pumpenkolben 3 abgewandten Seite ein Passdurchmesser zur Verfügung, in den sich anschließend der Federtopf 36 (wie auch im Zusammenhang mit Fig. 1 bis 4 beschrieben) einpressen oder auf andere Art und Weise befestigen lässt. Dieser Federtopf 36 erfüllt mehrere Funktionen. Über nicht bezeichnete feine Ausstanzungen oder Bohrungen in der Mitte des Topfbodens wird einerseits das Druckmittel vor dem Druckventil gefiltert. Der zylindrische Außenteil des Topfes 36 nimmt ferner die Kolbenrückstellfeder 4 und den Kolbendeckel 5 auf. Nach dem Umbördeln der Konsole 37 wird die vorgespannte Rückstellfeder 4 somit in dem Innenraum des Federtopfes 36 fixiert. Im eingebauten Zustand fixiert der Federtopf 36 außerdem mit seiner Konsole 37 noch das Dichtungspaket 2 im Pumpengehäuse.

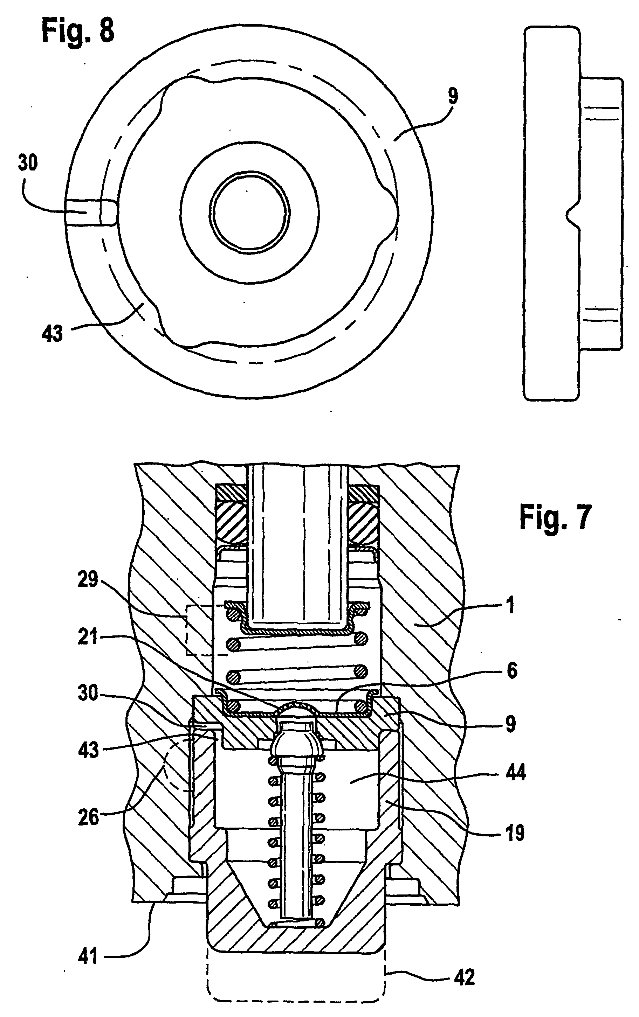

Das Ausführungsbeispiel nach Fig. 7 bis 10 besitzt einen Aufbau hinsichtlich des Federtopfes 6, wie er im Zusammenhang mit Fig. 1 bis 4 schon beschrieben worden ist, während der prinzipielle Aufbau des (Druck-)Ventils schon aus Fig. 3 bis 6 bekannt ist. Der wesentliche Unterschied zu den vorangegangenen Ausführungen besteht darin, dass der Innenraum des Ventildeckels 19 weitestgehend zu einer Dämpfungskammer 44 vergrößert wurde. Um gleichwohl die notwendige Stabilität und Materialstärke zu behalten, wurde das Ende des Deckels 19 hier über die Abschlusskante 41 des Pumpengehäuses 1 hinaus geführt. Wie in Fig. 7 durch die gestrichelt gezeichnete Konturlinie 42 dargestellt, muss je nach benötigter oder gewünschter Größe der Dämpfungskammer 44 deren herausragende Länge unter Umständen bis zu der Konturlinie 42 vergrößert werden.

Der Ventilsitzträger 9 kann, wie im Zusammenhang mit der Draufsicht in Fig. 8 gezeigt, zur besonders einfachen Pressverbindung zwischen dem Ventildeckel 19 und dem Ventilsitzträger 9 als Kaltumformteil mit Polygonprofil ausgebildet sein, um so in Teilbereichen des Umfangs einen radialen Spalt 43 zwischen dem Ventildeckel 19 und dem Ventilsitzträger 9 zu erzeugen. Der Deckel 19 bildet durch seine Formgebung das Dämpfungsvolumen der Dämpfungskammer 44. Der Deckel 19 kann dabei sowohl als Kaltumformteil als auch als Drehteil ausgebildet sein und wird in der Regel ebenso wie das Pumpengehäuse 1 aus Aluminium bestehen. Die Blendenfunktion wird, wie schon im Zusammenhang mit den Figuren 1 bis 4 beschrieben, durch eine oder mehrere radiale Kerben bzw. Nuten 30 gebildet (siehe auch Fig. 2 mit zugehöriger Beschreibung). Durch den radialen Spalt 43 strömt die Bremsflüssigkeit bzw. das Druckmittel an die axiale Stoßstelle von Ventilsitzträger 9 und Ventildeckel 19, wo durch die Kerbe bzw. Nut 30 eine Blendenöffnung gebildet ist. Durch die Kerbe bzw. Nut 30 und den Druckkanal 26 strömt das Druckmittel dann beispielsweise in Richtung eines Tandemhauptzylinders oder eines Radzylinders einer geregelten Bremsanlage. Der Saugkanal 29 stellt die Verbindung zu einem nicht gezeigten Saugventil der Pumpe dar, durch das das Druckmittel in die Pumpe eingesaugt wird.

Das Druckventil wird als vormontierte Einheit mit den Ventilteilen 9 und 19, dem Federtopf 6 und der Rückstellfeder 4 in das beispielsweise auch als Ventilblock dienende Pumpengehäuse 1 eingebaut. Das Druckventil und insbesondere auch die daran vorgesehene, durch die Nut 30 gebildete Blende können in vorteilhafter Weise durch den in Strömungsrichtung vor dem Druckventil befindlichen, insbesondere im Federtopf 6 vorgesehenen Filter 21 vor Partikeln (z. B. Schmutz oder Späne) aus dem Druckmittel.- bzw. Bremssystem geschützt werden. Der Filter 21 ist bevorzugt aus Blech geformt und insbesondere mittels eines Presssitzes an dem Ventilsitzträger 9 befestigt. Wie weiter oben schon im Zusammenhang mit den Fig. 1 bis 4 erwähnt, kann ein als Dämpfungsblende wirkender Kanal nicht nur durch eine Kerbe oder Nut 30 in dem Ventilsitzträger 9, sondern auch durch eine oder mehrere entsprechende radiale Kerben auf der gegenüberliegenden Stirnfläche am offenen Ende des Ventildekkels 19 hergestellt werden. Auch zwei gegenüberliegende kleinere Radialkerben können beispielsweise zur Bildung einer Dämpfungsblende eingesetzt werden, wobei hier allerdings für die richtige Lage der Kerben (nicht dargestellt) gesorgt werden muss.

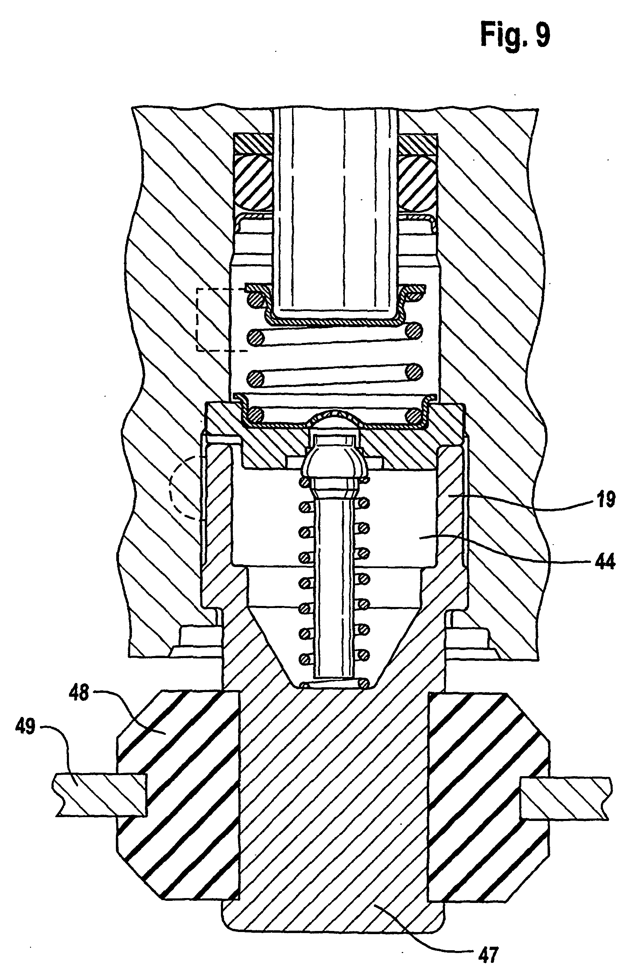

Wie in Fig. 9 gezeigt, kann die Größe des benötigten Volumens für die Dämpfungskammer 44 dazu führen (wie bereits in Zusammenhang mit Fig. 7 angedeutet), dass der Boden des Ventildeckels 19 aus dem vergleichsweise kleinen Pumpengehäuse hervorragt. Dies kann man sich gemäß einer Weiterbildung der Erfindung zunutze machen, indem man den verlängerten Ansatz 47 des Ventildeckels 19 als zusätzlichen Haltepunkt für die Befestigung des Pumpengehäuses bzw. einer hydraulisch-elektronischen Steuerung der Bremsanlage am Fahrzeug einsetzt. Dazu kann beispielsweise ein Gummidämpfer 48 auf den Ansatz 47 des Ventildeckels 19 aufgeschoben werden, in den dann beispielsweise ein Blechhalter 49 eingeknüpft werden kann. Die dargestellte Geometrie aus Halter 49 und Gummidämpfer 48 gemäß Fig. 9 ist hierbei nur beispielhaft.

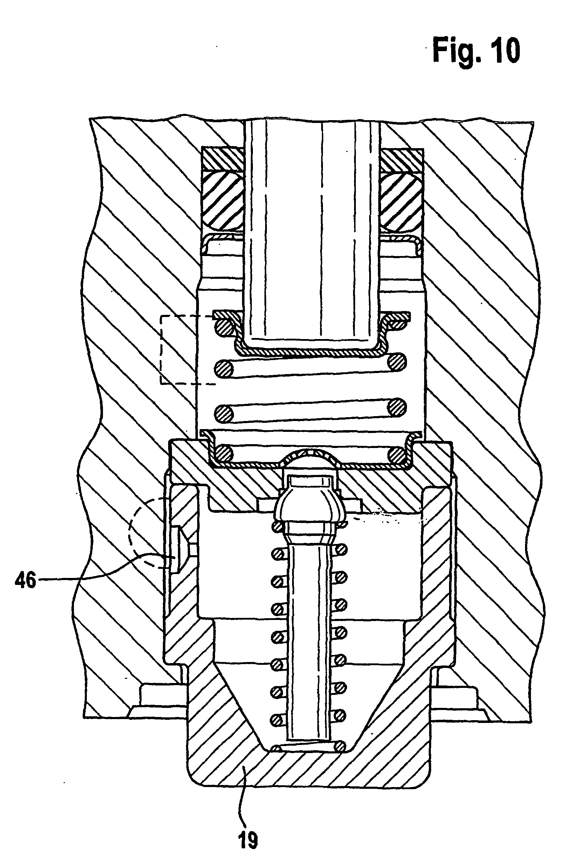

Im Zusammenhang mit Fig. 10 wurde auf die Ausgestaltung der Dämpfungsblende durch radiale Kerben verzichtet und statt dessen alternativ eine radiale Düsenbohrung 46 in die ringförmige Mantelfläche des Ventildeckels 19 eingebracht.

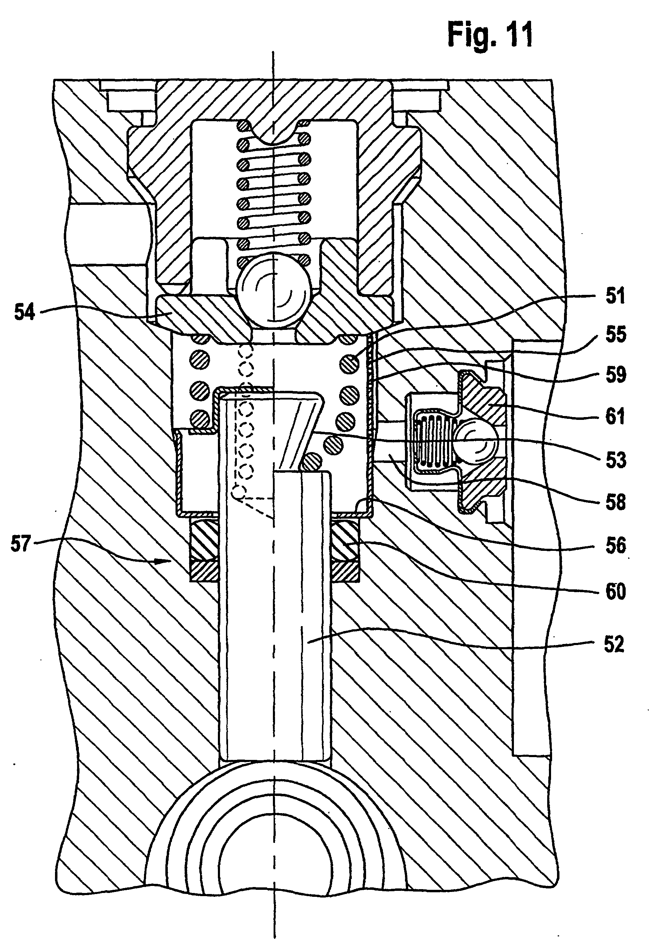

Die Auführungsform nach Fig. 11 zeigt eine Weiterbildung der vorliegenden Erfindung, um noch größere Baugruppen zu erhalten, welche zum Zusammenbau einer als Massenprodukt hergestellten Pumpe leicht und preisgünstig montiert werden können. Die Rückstellfeder 51 ist zum Kolben 52 hin mit Federwindungen versehen, die sich in ihrem Durchmesser vermindern. Man erhält somit eine Rückstellfeder 51, die an ihrem kolbenseitigen Ende beispielsweise konisch eingezogen ist. Gleichzeitig kann der Kolben 52 an seinem oberen Ende mit einer geeigneten Hinterschneidung 53 versehen werden, in die die Feder 51 eingerastet werden kann. Die gezeigte Möglichkeit einer kegelförmigen Hinterschneidung 53 ist nur beispielhaft. Die Hinterschneidung kann auch aus einer Nut mit viereckiger oder teilkreisförmiger Kontur oder einer halbkugelförmigen Kontur bestehen. Wesentlich ist, dass durch die Hinterschneidung 53 für die Feder 51 eine hinreichend große, sich in radialer Richtung erstreckende Auflagefläche geschaffen wird, welche ausreicht, um die notwendige Rückstellkraft durch die Feder 51 auf den Kolben 52 ausüben zu können, so dass dieser mit seinem anderen Ende im Eingriff mit dem nicht bezeichneten Exzenter bleibt.

Die Rückstellfeder 51 ist, wie bereits in den vorangegangenen Ausführungsbeispielen beschrieben, über einen Federtopf oder aber auch direkt an dem Ventilsitzträger 54 befestigt (nicht gezeigt), etwa durch Einrasten oder Verklemmen. In das Pumpengehäuse kann zusätzlich zum Federtopf oder auch als dessen besondere Ausbildung ein Abstandshalter 55 eingefügt sein, der mit seiner Konsole 56 die Dichtungspackung 57 bzw. eine Kolbendichtung 60 in Position hält, wobei sich der Abstandshalter 55 ebenso wie der weiter oben beschriebene Federtopf an dem Ventilsitzträger 54 abstützen kann bzw. der Abstandshalter 55 selbst als Federtopf ausgebildet sein kann. Die Dichtungspackung 57 umfaßt wie bei allen Ausführungsbeispielen der vorliegenden Erfindung eine Kolbendichtung 60 sowie einen nicht bezeichneten Stützring.

Der Abstandshalter bzw. Federtopf 55 ist bevorzugt zumindest im Bereich eines Saugkanals 58 mit einem Sieb bzw. Filter 59 versehen oder als Filter 59 ausgestaltet, so dass er gleichzeitig eine Filterfunktion für das durchströmende Druckmittel ausübt. Der Abstandshalter 55 mit der Filterfunktion kann sowohl als Stanzteil oder als Kunststoffteil ausgebildet sein. Es ist aber auch möglich, wie im Zusammenhang mit dem Federtopf 6 weiter oben erläutert, in den Ventilsitzträger 54 in Fig. 11 nicht dargestellte Hinterschneidungen einzuformen, in die das in der Zeichnung obere Ende der Rückstellfeder 51 einrasten kann. Hierdurch wird erfindungsgemäß eine Vormontagegruppe erzielt, die neben dem Ventil und der Feder 51 auch noch den Kolben 52 umfassen kann. Es ist dabei nicht notwendig, dass die Feder 51 von außen her in die Hinterschneidung 53 des Kolbens eingreift. Vielmehr kann der Kolben 52 gemäß der Darstellung auf der linken Seite von Fig. 11 auch mit einer in der Zeichnung von oben her kommenden Bohrung versehen sein, in der eine radial nach außen gerichtete Hinterschneidung vorgesehen ist, in welche die in dieser Bohrung eingeführte Feder 51 einrastet.

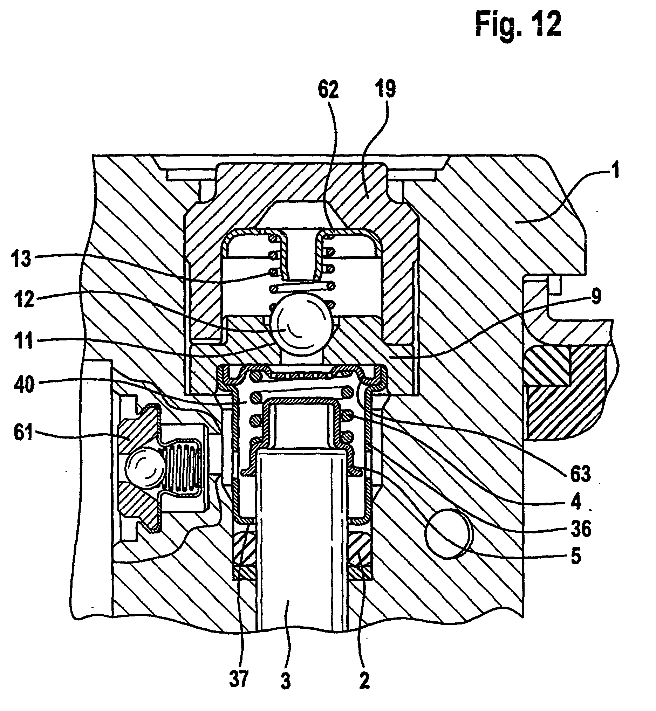

In Fig. 11 und 12 ist ein Saugventil mit 61 bezeichnet. Gemäß einer bevorzugten Weiterbildung der vorliegenden Erfindung ist dieses Saugventil 61 bei allen Ausführungsbeispielen als von Druckventil, Rückstellfeder 4, 51 und Kolben 3,52 separates Bauteil ausgebildet. Das Saugventil 61 ist insbesondere mittels Verstemmen im Pumpengehäuse 1 befestigt und bildet zusammen mit diesem eine einfach zu handhabende und getrennt vom Druckventil prüfbare Baueinheit.

Gemäß dem in Fig. 12 gezeigten Ausführungsbeispiel der vorliegenden Erfindung ist der Pumpenkolben 3 erneut im Pumpengehäuse 1 über die Kolbendichtung 2 abgedichtet geführt. Der Pumpenkolben 3 kann mit besonderem Vorteil, ebenso wie bei den vorhergehenden Beispielen, eine Nadel bzw. Nadelrolle eines handelsüblichen Wälz- oder Nadellagers sein. Insbesondere ist der Kolben 3 somit als Vollkolben 3 ausgebildet. Ein derartiger Kolben 3 besitzt eine Oberfläche mit besonderer Güte, die bezüglich Verschleiß und Abdichtung hervorragende Eigenschaften aufweist. Außerdem sind Nadeln eines Lagers als Massenprodukte besonders kostengünstig.

Das Druckventil umfaßt erneut den Ventilsitzträger 9, an dem der Ventilsitz 11 vorgesehen ist, der mit dem insbesondere als Kugel ausgebildeten Ventilkörper 12 zusammenwirkt. Der Ventilkörper 12 ist mittels der Feder 13 gegen den Ventilsitz 11 vorgespannt, wobei sich die Feder 13 mit ihrem anderen Ende an einem Federkäfig 62 abstützt, der eine nicht bezeichnete Führung für die Feder 13 aufweist. Der Federkäfig 62 ist analog zu den vorherigen Ausführungsbeispielen am Ventildeckel 19 befestigt, beispielsweise durch Einpressen.

Im Arbeitsraum 40 der Kolbenpumpe ist der Federtopf 36 vorgesehen, der vorzugsweise mit dem Ventilsitzträger 9 verbunden ist. An seinem zur Kolbendichtung 2 hin gerichteten Ende weist der Federtopf 36, analog zum in Fig. 5 und 6 dargestellten Ausführungsbeispiel, eine zum Kolben 3 hin gerichtete Konsole 37 auf, die die Dichtung 2 an ihrer vorgesehenen Position hält. Außerdem wirken die Konsolen 37 mit am Kolbendeckel 5 vorgesehenen, nach außen ragenden radialen Vorsprüngen zusammen, so dass das Druckventil, der Federtopf 36, der Kolbendeckel 5 und die Rückstellfeder 4 als eigenständig handhabbare Baueinheit in das Pumpengehäuse 1 eingebaut werden können. Erfindungsgemäß ist somit auch die Rückstellfeder 4 indirekt über den Federtopf 36 am Ventilsitzträger 9 befestigt. Zusätzlich zu diesem Aufbau kann am Ventilsitzträger 9 noch ein Filter 63 vorgesehen sein, der hier nicht zusammen mit dem Federtopf 36, sondern als separates Bauteil ausgebildet ist.

## Patentansprüche

1. Kolbenpumpe, insbesondere für regelbare Bremssysteme, bei der ein Arbeitsraum (40) der Pumpe vor einem Kolben (3, 52) durch ein Druckventil abgegrenzt ist, wobei eine Rückstellfeder (4, 51) sich mit ihrem einen Ende an einem Ventilsitzträger (9, 54) des Druckventils abstützt und mit ihrem anderen Ende den Kolben (3, 52) in seine untere Totpunktlage zurückstellt, **dadurch gekennzeichnet, dass** die Rückstellfeder (4, 51) an ihrem einen Ende indirekt über einen Federtopf (6,36,55) am Ventilsitzträger (9, 54) befestigt ist.

2. Kolbenpumpe nach Anspruch 1, **dadurch gekennzeichnet, dass** der Federtopf (6, 36, 55) mit zumindest einem Abschnitt seiner Außenfläche an der Innenwand einer Ausnehmung (8) des Ventilsitzträgers (9, 54) gehalten ist.

3. Kolbenpumpe nach Anspruch 1 oder 2, **dadurch gekennzeichnet, dass** der Federtopf (36, 55) an seinem zum Kolben (3, 52) hin gerichteten Ende eine radial nach innen gerichtete Konsole (37, 56) aufweist.

4. Kolbenpumpe nach Anspruch 3, **dadurch gekennzeichnet, dass** die Konsole (37, 56) einen Anschlag für eine im Pumpengehäuse (1) angeordnete Kolbendichtung (2, 60) bildet.

5. Kolbenpumpe nach einem der vorangegangenen Ansprüche, **dadurch gekennzeichnet, dass** am Federtopf (6, 36, 55) separat oder einstückig ein Filter (21, 59, 63) vorgesehen ist.

6. Kolbenpumpe nach einem der vorangegangenen Ansprüche, **dadurch gekennzeichnet, dass** als Kolben (3, 52) die Nadel eines handelsüblichen Nadellagers vorgesehen ist.

7. Kolbenpumpe nach einem der vorangegangenen Ansprüche, **dadurch gekennzeichnet, dass** im Pumpengehäuse (1) ein Saugventil (61) vorgesehen ist, das vom Druckventil, der Rückstellfeder (4, 51), dem Federtopf (6, 36, 55) und dem Kolben (3, 52) unabhängig montier- und prüfbar ist.

8. Kolbenpumpe nach einem der vorangegangenen Ansprüche, **dadurch gekennzeichnet, dass** die Rückstellfeder (51) mit dem Pumpenkolben (52) verbunden ist.

9. Kolbenpumpe nach einem der vorangegangenen Ansprüche, **dadurch gekennzeichnet, dass** das Druckventil einen Ventildeckel (19) aufweist, in dem eine Dämpfungskammer (44) vorgesehen ist.

10. Kolbenpumpe nach Anspruch 1, **dadurch gekennzeichnet, dass** eine vormontierte Einheit vorgesehen ist, welche eine vorgespannte Rückstellfeder (4), einen Federtopf (36) und einen Kolbendeckel (5) umfasst.

11. Kolbenpumpe nach Anspruch 4, **dadurch gekennzeichnet, dass** die Konsole (37) als Anschlag für den Kolbendeckel (5) vorgesehen ist.

## Claims

1. Piston pump, in particular for controllable brake systems, wherein a working chamber (40) of the pump in front of a piston (3, 52) is delimited by a pressure valve, and a resetting spring (4, 51) with its one end is supported on a valve seat carrier (9, 54) of the pressure valve and with its other end resets said piston (3, 52) into its bottom dead center position,
**characterized in that** the resetting spring (4, 51) at its one end is attached directly or indirectly to the valve seat carrier (9, 54) by way of a spring retainer cup (6, 36, 55).

2. Piston pump as claimed in claim 1,
**characterized in that** the spring retainer cup (6, 36, 55) with at least one portion of its outside surface is retained at the inside wall of a recess (8) of the valve seat carrier (9, 54).

3. Piston pump as claimed in claim 1 or 2,
**characterized in that** the spring retainer cup (36, 55) includes a radially inwardly directed console (37, 56) at its end pointing to the piston (3, 52).

4. Piston pump as claimed in claim 3,
**characterized in that** the console (37, 56) provides a stop for a piston seal (2, 60) arranged in the pump housing (1).

5. Piston pump as claimed in any one of the preceding claims,
**characterized in that** a filter (21, 59, 63) is provided separately or integrally at the spring retainer cup (6, 36, 55).

6. Piston pump as claimed in any one of the preceding claims,
**characterized in that** the needle of a commercial needle bearing is provided as piston (3, 52).

7. Piston pump as claimed in any one of the preceding claims,
**characterized in that** in the pump housing (1), a suction valve (61) is arranged that can be assembled and tested independently of the pressure valve, the resetting spring (4, 51), the spring retainer cup (6, 36, 55), and the piston (3, 52).

8. Piston pump as claimed in any one of the preceding claims,
**characterized in that** the resetting spring (51) is connected to the pump piston (52).

9. Piston pump as claimed in any one of the preceding claims,
**characterized in that** the pressure valve includes a valve cover (19) in which a damping chamber (44) is incorporated.

10. Piston pump as claimed in claim 1,
**characterized in that** a preassembled unit is provided, comprising a preloaded resetting spring (4), a spring retainer cup (36) and a piston cover (5).

11. Piston pump as claimed in claim 4,
**characterized in that** the console (37) is provided as a stop for the piston cover (5).

## Revendications

1. Pompe à piston, en particulier pour systèmes de freinage à régulation, dans laquelle une chambre de travail (40) de la pompe est délimitée, devant un piston (3, 52), par une soupape de refoulement, un ressort de rappel (4, 51) prenant appui, par l'une de ses extrémités, contre un support de siège de soupape (9, 54) de la soupape de refoulement, et par son autre extrémité rappelle le piston (3, 52) dans sa position de point mort bas, **caractérisée en ce que** le ressort de rappel (4, 51) est fixé à l'une de ses extrémités indirectement, par un pot de ressort (6, 36, 56), au support de siège de soupape (9, 54).

2. Pompe à piston selon la revendication 1, **caractérisée en ce que** le pot de ressort (6, 36, 55) est maintenu, par au moins une partie de sa surface extérieure, contre la paroi intérieure d'un évidement (8) du support de siège de soupape (9, 54).

3. Pompe à piston selon la revendication 1 ou 2, **caractérisée en ce que** le pot de ressort (36, 55) présente, à son extrémité dirigée vers le piston (3, 52), une console (37, 56) dirigée radialement vers l'intérieur.

4. Pompe à piston selon la revendication 3, **caractérisée en ce que** la console (37, 56) forme une butée pour une garniture d'étanchéité de piston (2, 60) disposée dans le carter (1) de la pompe.

5. Pompe à piston selon l'une des revendications précédentes, **caractérisée en ce que** sur le pot de ressort (6, 36, 56) est prévu, séparément ou d'une seule pièce, un filtre (21, 59, 63).

6. Pompe à piston selon l'une des revendications précédentes, **caractérisée en ce qu'**il est prévu comme piston (3, 52) l'aiguille d'un palier de roulement à aiguilles du commerce.

7. Pompe à piston selon l'une des revendications précédentes, **caractérisée en ce que** dans le carter (1) de la pompe est prévue une soupape d'admission (61) qui peut être montée et contrôlée indépendamment de la soupape de refoulement, du ressort de rappel (4, 51), du pot de ressort (6, 36, 55) et du piston (3, 52).

8. Pompe à piston selon l'une des revendications précédentes, **caractérisée en ce que** le ressort de rappel (51) est relié au piston (52) de la pompe.

9. Pompe à piston selon l'une des revendications précédentes, **caractérisée en ce que** la soupape de refoulement comporte un couvercle de soupape (19) dans lequel est prévue une chambre d'amortissement (44).

10. Pompe à piston selon la revendication 1, **caractérisée en ce qu'**il est prévu une unité prémontée qui comprend un ressort de rappel (4) précontraint, un pot de ressort (36) et un couvercle de piston (5).

11. Pompe à piston selon la revendication 4, **caractérisée en ce que** la console (37) est prévue comme butée pour le couvercle de piston (5).
